(19) Europäisches Patentamt
European Patent Office
Office européen des brevets

(11) **EP 1 439 437 B1**

(12) **EUROPÄISCHE PATENTSCHRIFT**

(45) Veröffentlichungstag und Bekanntmachung des Hinweises auf die Patenterteilung:
**08.08.2007 Patentblatt 2007/32**

(51) Int Cl.:
**_G05B 13/00_** _(2006.01)_

(21) Anmeldenummer: **03025543.4**

(22) Anmeldetag: **08.11.2003**

(54) **Verfahren zur aktiven Dämpfung niederfrequenter Schwingungen an numerisch gesteuerten Werkzeugmaschinen**

Method for active damping of low frequency oscillations in numerically controlled machine tools

Procédé d'amortissement actif des oscillations pour machine-outils à commande numérique

(84) Benannte Vertragsstaaten:
**AT BE BG CH CY CZ DE DK EE ES FI FR GB GR HU IE IT LI LU MC NL PT RO SE SI SK TR**

(30) Priorität: **18.01.2003 DE 10301765**

(43) Veröffentlichungstag der Anmeldung:
**21.07.2004 Patentblatt 2004/30**

(73) Patentinhaber: **Dr. Johannes Heidenhain GmbH
83292 Traunreut (DE)**

(72) Erfinder:
• **Kerner, Norbert
83374 Traunwalchen (DE)**
• **Lengenfelder, Hans
84453 Mühldorf (DE)**

(56) Entgegenhaltungen:
WO-A-01/23967          WO-A-02/077484
DE-A- 19 634 923       US-B1- 6 216 047

**Beschreibung**

Die Erfindung betrifft eine Reglerstruktur zur Dämpfung niederfrequenter Schwingungen an numerisch gesteuerten Werkzeugmaschinen nach dem Oberbegriff des Anspruches 1. Solche Schwingungen beeinflussen die Oberflächenqualität eines bearbeiteten Werkstückes erheblich.

Die Numerische Steuerung einer Werkzeugmaschine kontrolliert die Bearbeitung eines Werkstückes anhand eines Teileprogramms, in dem in verschiedensten Bearbeitungszyklen ein genauer Bearbeitungsvorgang festgelegt ist. Ein Werkzeug muß dabei möglichst genau einer vorgegebenen Bahn folgen, so daß die Form des fertigen Werkstücks den Vorgaben entspricht. Hierzu müssen die verschiedenen Achsen der Werkzeugmaschine mit ihren jeweiligen rotatorischen oder linearen Antrieben entsprechend angesteuert werden. Um eine vorgegebene Bearbeitungsbahn einhalten zu können, finden Reglerstrukturen Anwendung, die in einem Lageregler aus der jeweils vorgegebenen Sollposition und der tatsächlichen Position des Werkzeugs eine Sollgeschwindigkeit (für Linearantriebe) bzw. Solldrehzahl (für rotatorische Antriebe) berechnen, mit der dann ggf. eine Positionsabweichung korrigiert werden soll. Die Differenz zwischen der Solldrehzahl und der tatsächlichen Drehzahl wird in einem Drehzahlregler in einen Sollstrom für den Antrieb umgesetzt, der über die Motorkonstante des Antriebs auch einem Solldrehmoment entspricht. In einem Stromregler wird aus diesem Sollstrom nach Vergleich mit dem tatsächlichen Strom eine Sollspannung erregelt, die im Antriebsverstärker umgesetzt und an die Phasen des Motors angelegt wird. Geeignete Meßsysteme überprüfen die tatsächliche Lage des Werkzeugs, aus der die tatsächliche Geschwindigkeit abgeleitet werden kann. Stromsensoren in den Zuleitungen zum Motor erfassen den tatsächlichen Strom.

Die Verbindung zwischen Antrieb und Werkzeug ist nie völlig starr, sondern enthält vielmehr elastische, also schwingungsfähige Komponenten. Es treten daher mechanische Resonanzfrequenzen auf, die bei ungünstiger Parametrierung der Reglerstruktur und/oder geringer Eigendämpfung der elastischen Komponenten zu unerwünschten Schwingungen führen können. Durch die Forderung nach immer höherer Bandbreite der Reglerstrukturen, realisiert vor allem durch hohe Verstärkungsfaktoren im Lageregelkreis, werden auch solche niederfrequenten Resonanzfrequenzen verstärkt und überlagern die Werkzeugbahn. Niederfrequente Schwingungen im Bereich bis etwa 50 Hz sind als unerwünschte Oberflächenwelligkeit im bearbeiteten Werkstück deutlich sichtbar.

Besonders negativ wirkt sich bei der Bildung solcher Resonanzschwingungen eine negative Phasendrehung aus, wie sie insbesondere durch die Verzögerungen der Regelstrecke im Zusammenwirken mit dem Integralteil des Drehzahlreglers entsteht. Durch Reduzierung des entsprechenden Verstärkungsfaktors läßt sich der Integralanteil verringern und damit die Resonanzschwingung abschwächen, gleichzeitig nimmt aber auch die Steifheit der Werkzeugmaschine und die Qualität der Störausregelung ab.

Die WO 01/23967 A1 beschreibt daher die Parametrierung eines Reglersystems, bei dem die Rückkopplung der tatsächlichen Drehzahl auf die Solldrehzahl vor dem Drehzahlregler auf zwei Additionsstellen aufgetrennt ist, und bei dem in den Zweig vor dem integrierenden Element des Drehzahlreglers ein Referenzmodell in Form eines Proportional-Elements mit Verzögerung zweiter Ordnung (PT2-Glied) geschaltet ist. Dieses Referenzmodell ist dem Verhalten des geschlossenen Regelkreises ohne Integralteil im Drehzahlregler angepaßt, so daß sich der ungünstige Einfluß des Integralteils im Führungsverhalten des Drehzahlreglers nicht zeigt. Wegen der im Integralteil auftretenden negativen Phasenverschiebung von 90 Grad ist dieser ungünstige Einfluß besonders stark. Mit dieser Anordnung lassen sich aber nur Resonanzfrequenzen oberhalb etwa 20 Hz dämpfen, und bei großen Maschinen mit mehreren Resonanzen kann diese Schaltung nur auf die jeweils höchste Resonanzfrequenz positiv wirken, während niedrigere Resonanzfrequenzen unter Umständen sogar negativ beeinflußt werden.

Aufgabe der Erfindung ist es daher, eine Reglerstruktur zu schaffen, die insbesondere tiefe Resonanzen an einer numerisch gesteuerten Werkzeugmaschine aktiv dämpfen kann.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind.

Es wird eine Reglerstruktur zur aktiven Dämpfung störender niederfrequenter Schwingungen an einer numerisch gesteuerten Werkzeugmaschine vorgeschlagen, bei der in einer Reglerstruktur mit Drehzahlregler mit Proportionalteil und Integralteil einer Additionsstelle vor oder nach dem Integralteil ein zur störenden niederfrequenten Schwingung phasenverschobenes und gleichanteilfreies Korrektursignal aufgeschaltet ist. Dieses Korrektursignal ist in einem aktiven Dämpfungselement gebildet.

Eine mögliche Ausführungsform der Erfindung geht dabei davon aus, daß die störende niederfrequente Schwingung auch der Solldrehzahl am Ausgang des Lagereglers überlagert ist, da dem Lageregler die Differenz aus Lagesollwert und Lageistwert zugeführt wird, und sich eine störende Schwingung ja gerade in einem schwingenden Lageistwert niederschlägt.

Befreit man daher die Solldrehzahl von ihrem Gleichanteil und stellt die Phasenlage richtig ein, so eignet sich das so erhaltene Korrektursignal bei Aufschaltung auf den Integralteil des Drehzahlreglers zur aktiven Dämpfung oder Auslöschung der störenden niederfrequenten Schwingung.

Ein Vorteil der Erfindung besteht darin, daß ein einmal parametriertes aktives Dämpfungselement sehr stabil arbeitet, auch wenn sich z.B. durch Laständerungen eine Verschiebung der störenden Resonanzfrequenz ergibt. Dies bedeutet natürlich auch, daß die Parametrierung selbst einfach durchführbar ist.

Weitere Vorteile sowie Einzelheiten der vorliegenden Erfindung ergeben sich aus der nachfolgenden Beschreibung bevorzugter Ausführungsformen anhand der Figuren. Dabei zeigt

Figur 1 eine Reglerstruktur mit aktiver Dämpfung niederfrequenter Schwingungen,

Figur 2 eine entsprechend der Blockschaltalgebra gleichwertige Abwandlung der Reglerstruktur nach Figur 1,

Figur 3 eine spezielle Ausführung einer Reglerstruktur mit aktiver Dämpfung niederfrequenter Schwingungen.

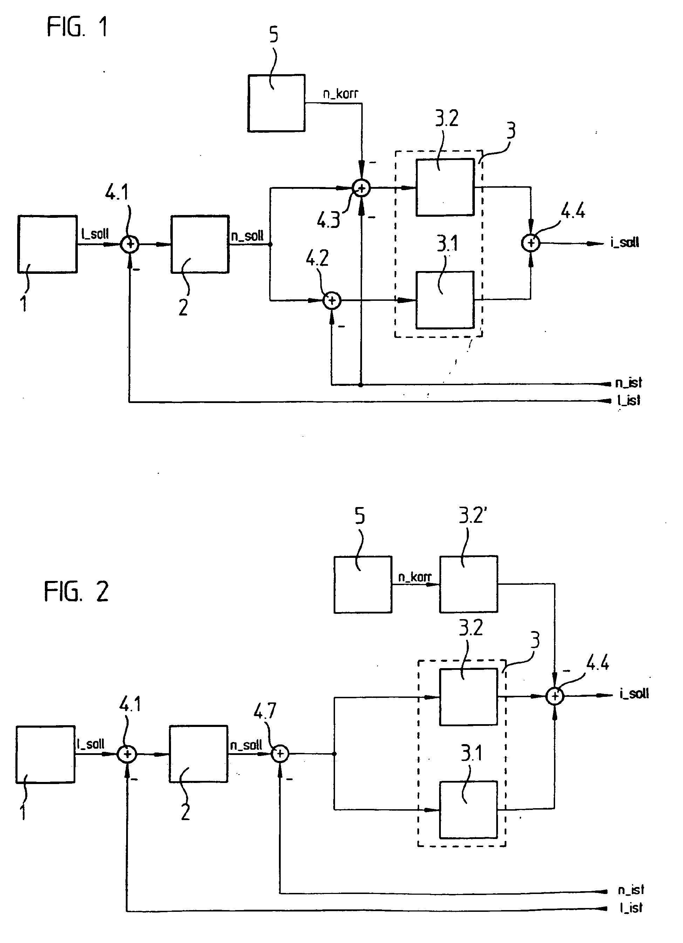

Figur 1 zeigt einen Ausschnitt aus der Reglerstruktur einer numerisch gesteuerten Werkzeugmaschine. Aus den Daten eines Teileprogramms berechnet ein Interpolator 1 kurze Segmentstücke, deren Endpunkte als Lagesollwert l_soll abgegeben werden. An einer Additionsstelle 4.1 wird von diesem Lagesollwert l_soll der Lageistwert l_ist abgezogen. Die so erhaltene Lagedifferenz wird dem Lageregler 2 zugeführt, der je nach Größe der Lagedifferenz und eingestellter Lagereglerverstärkung eine Solldrehzahl n_soll bildet, mit der die Lagedifferenz ausgeglichen werden soll. Der Lageregler 2 kann beispielsweise als einfacher Proportionalregler ausgebildet sein, der die Lagedifferenz mit einem Faktor multipliziert und als Solldrehzahl n_soll ausgibt.

An separaten Additionsstellen 4.2 und 4.3 wird jeweils die Differenz zwischen der Solldrehzahl n_soll und der Istdrehzahl n_ist gebildet, und diese Abweichung der Drehzahl jeweils an den Proportionalteil 3.1 bzw. Integralteil 3.2 des Drehzahlreglers 3 gegeben. Am Ausgang des Drehzahlreglers 3 steht ein Sollstrom i_soll zur Verfügung, der aus der Summe der Ausgänge des Proportionalteils 3.1 und des Integralteils 3.2 des Drehzahlreglers 3 besteht. Der Sollstrom i_soll entspricht, multipliziert mit der Motorkonstante, einem Solldrehmoment, und wird in einem Stromregler (ab hier ist der Regelkreis nicht mehr in der Figur dargestellt) in eine Sollspannung umgesetzt. Hierzu dient wieder ein Regelkreis, dem ein Stromistwert zugeführt wird, der mittels Stromsensoren am Motor erfaßt wird. Ein Leistungsverstärker erzeugt die geforderte Spannung etwa über eine Ansteuerung der Motorphasen mittels Pulsweitenmodulation (PWM). Die resultierende Bewegung wird dann mit Positionsmeßsystemen erfaßt, die den Lageistwert l_ist, und abgeleitet davon, auch die Istdrehzahl n_ist liefern.

Wird nun eine niederfrequente mechanische Resonanzfrequenz der Werkzeugmaschine angeregt, so beginnt die Werkzeugmaschine zu schwingen. Diese Schwingung pflanzt sich über den Lageistwert l_ist in den Regelkreis fort. In den verschiedenen Elementen des Regelkreises treten dabei frequenzabhängig unterschiedliche Phasenverschiebungen und Dämpfungen oder Verstärkungen auf. Einen besonders hohen Beitrag zur negativen Phasenverschiebung liefert hier der Integralteil 3.2 des Drehzahlreglers 3. Eine aktive Dämpfung einer störenden niederfrequenten Schwingung setzt daher hier besonders wirkungsvoll an. Die der Erfindung zugrundeliegende Idee beruht darauf, dem Integralteil 3.2 des Drehzahlreglers 3 ein Korrektursignal n_korr zukommen zu lassen, das die unerwünschte Schwingung dämpft oder sogar eliminiert. Vereinfacht dargestellt ist hierzu am Eingang des Integralteils 3.2 des Drehzahlreglers 3 ein gleichanteilfreies Signal mit der Frequenz der unerwünschten Schwingung nötig, das aber gegen diese um ca. 180 Grad phasenverschoben ist. Die Phasenverschiebung bezieht sich dabei auf die Phasenlage der Schwingung, die über die Solldrehzahl n_soll an der Additionsstelle 4.3 des Integralteils 3.2 des Drehzahlreglers 3 eingekoppelt wird. Die tatsächlich zur optimalen Dämpfung oder Eliminierung nötige Phasenverschiebung wird aber etwas von 180 Grad abweichen, da auch über den Proportionalteil 3.1 eine Verstärkung der unerwünschten Schwingung stattfindet. Dies und weitere Wechselwirkungen im Regelkreis ist bei der Parametrierung des aktiven Dämpfungselements 5 zu berücksichtigen.

Die Aufgabe des in der Figur 1 nicht näher ausgeführten aktiven Dämpfungselements 5 besteht also zunächst darin, ein geeignetes Korrektursignal n_korr zur Verfügung zu stellen, mit dem die beschriebene negative Auswirkung des Integralteils 3.2 auf das Schwingungsverhalten bekämpft werden kann. Die Aufteilung der Differenzbildung aus Solldrehzahl n_soll und Istdrehzahl n_ist auf die Additionsstellen 4.2 und 4.3 erlaubt auf elegante Weise die gezielte Beeinflussung des Integralteils 3.2.

Eine regelungstechnisch gleichwertige, aber aufwendigere Alternative der Schaltung nach Figur 1 ist in Figur 2 dargestellt. Das Korrektursignal n_korr ist nun nicht vor dem Integralteil 3.2, sondern erst nach dem Integralteil 3.2 an der Additionsstelle 4.4 eingekoppelt. Dies ist nach den Regeln der Blockschaltalgebra der Anordnung entsprechend Figur 1 dann völlig gleichwertig, wenn ein zusätzlicher Integralteil 3.2' zwischen das aktive Dämpfungselement 5 und die Additionsstelle 4.4 geschaltet wird. Der Integralteil 3.2 und der zusätzliche Integralteil 3.2' müssen sich dabei völlig entsprechen, was zumindest bei analoger Realisierung einen erheblichen Aufwand bedeutet. Die Differenzbildung aus Solldrehzahl n_soll und Istdrehzahl n_ist kann nun an nur einer einzigen Additionsstelle 4.7 erfolgen. Es gibt also zwei völlig gleichwertige (und im Sinne der Blockschaltalgebra tatsächlich identische) Möglichkeiten, das Korrektursignal n_korr aufzuschalten.

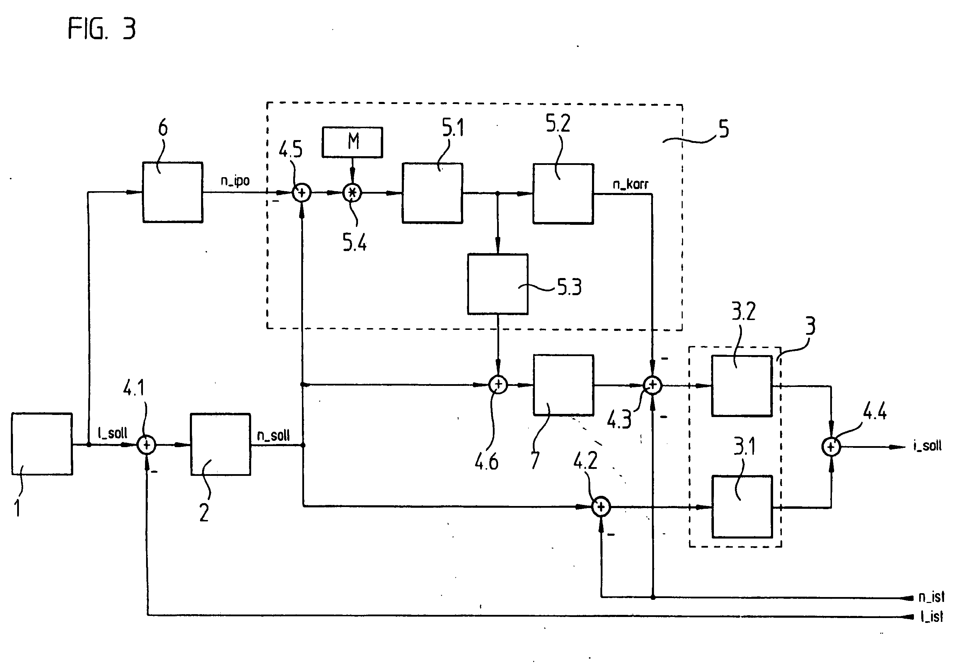

Eine mögliche Ausgestaltung der Erfindung zeigt Figur 3. Einander entsprechende Elemente sind wie in Figur 1 bzw. Figur 2 bezeichnet, so daß diese und deren Verknüpfung nicht erneut erklärt werden müssen. Die vorliegende Ausgestaltung beruht auf der Erkenntnis, daß die störende niederfrequente Schwingung auch in der Solldrehzahl n_soll des Lagereglers 2 enthalten ist. Diese Tatsache läßt sich zur Bildung des Korrektursignals n_korr verwenden.

Zur Eliminierung des Gleichanteils der Solldrehzahl n_soll wird an einer Additionsstelle 4.5 die Differenz aus einer abgeleiteten Drehzahl n_ipo und der Solldrehzahl n_soll gebildet. Die abgeleitete Drehzahl n_ipo ist dabei in einem Differenzierer 6 gebildet, der die Lagesollwerte l_soll des Interpolators 1 differenziert. Diese abgeleitete Drehzahl n_ipo enthält keine störenden Resonanzschwingungen und läßt sich auch zur Drehzahlvorsteuerung verwenden. Bildet man die Differenz an der Additionsstelle 4.5 so, daß die abgeleitete Drehzahl n_ipo mit einem negativen Vorzeichen aufgeschaltet wird, so erhält man ein weitgehend gleichanteilfreies Signal, dessen Phasenlage der Schwingung der Solldrehzahl entspricht.

Im aktiven Dämpfungselement 5 befindet sich ein Verstärker mit einstellbarem Verstärkungsfaktor M. Dies ist in Figur 3 durch eine Multiplikationsstelle 5.4 dargestellt, an der die Differenz aus der abgeleiteten Drehzahl n_ipo und der Solldrehzahl n_soll mit dem Faktor M multipliziert wird. Dies erlaubt es, die aktive Dämpfung der niederfrequenten Schwingung stufenlos zu regulieren. Für M=0 ist das aktive Dämpfungselement 5 völlig deaktiviert.

Es empfiehlt sich dann zusätzlich, den tieffrequenten Anteil der Differenz aus der Solldrehzahl n_soll und der abgeleiteten Drehzahl n_ipo weiter zu senken. Dies kann mittels eines Differentialelements mit Verzögerung erster Ordnung (DT1-Glied) 5.1 geschehen, durch das die Differenz aus der abgeleiteten Drehzahl n_ipo und der Solldrehzahl n_soll geführt wird. Das nun gleichanteilfreie Signal wird schließlich einem Verzögerungs-Element zweiter Ordnung (PT2-Glied) 5.2 zugeführt, das auf die störende Resonanzfrequenz abgestimmt ist. Zur Stabilisierung wird der Ausgang des DT1-Glieds 5.1 in einem Querzweig über ein Verzögerungselement (PT1-Glied) 5.3 und eine Additionsstelle 4.6 auch dem Zweig der auf den Integralteil 3.2 des Drehzahlreglers 3 geleiteten Solldrehzahl n_soll zugeführt.

Das im aktiven Dämpfungselement 5 erzeugte Korrektursignal n_korr ist damit ein gleichanteilfreies, zur störenden niederfrequenten Schwingung phasenverschobenes Signal und wird an der Additionsstelle 4.3 vor dem Integralteil 3.2 des Drehzahlreglers zusätzlich aufgeschaltet. Die störende Resonanz läßt sich so wirkungsvoll unterdrücken.

Zur Parametrierung des aktiven Dämpfungselements 5 wird die Dämpfungszeitkonstante T2 des PT2-Glieds 5.2 entsprechend der zu bedämpfenden Resonanzfrequenz Fres gewählt:

$$T2 = k \,/\, (2 * \pi * Fres)$$

mit einem Zeitkonstantenverschiebefaktor k, der sich in der Praxis zwischen 0.8 und 1.0 bewegt. Der Zeitkonstantenverschiebefaktor k erlaubt ein Verstimmen des PT2-Elements 5.2, was bei der Parametrierung der Reglerstruktur Vorteile bringen kann. Für eine Resonanzfrequenz von 10 Hz erhält man so z.B. (für k = 1) eine Zeitkonstante T2 von 0.016s. Für eine optimale Dämpfung von D = 0.35 ergibt sich dann (aus der für PT2-Elemente gültigen Beziehung D = T2/(2*T1)) beispielsweise eine T1-Zeitkonstante von

$$T1 = T2 \,/\, 0.7$$

für das PT2-Glied 5.2. Die Zeitkonstante des DT1-Gliedes 5.3 sollte dann deutlich höher, z.B. ca. das Zehnfache von T2 betragen, die Zeitkonstante des PT1-Gliedes sollte niedriger, z.B. bei ca. einem Dreiviertel von T2 liegen. Die angegebenen Zahlenwerte liefern natürlich nur eine ungefähre Größenordnung für einen speziellen Anwendungsfall, die genaue Parametrierung des aktiven Dämpfungselements 5 wird sich von Fall zu Fall unterscheiden.

Eine besonders stabile Reglerstruktur läßt sich erzielen, wenn das aktive Dämpfungselement 5 mit einem in der Einleitung beschriebenen Referenzmodell 7 kombiniert wird, das ja für besonders tiefe Resonanzen wenig geeignet ist, für höherfrequente Resonanzen aber durchaus eine Berechtigung hat. Das Referenzmodell 7 wird hierzu unmittelbar vor die Additionsstelle 4.3 vor dem Integralteil 3.2 des Drehzahlreglers 3 geschaltet. Dieses Referenzmodell 7 ist dem Verhalten des geschlossenen Regelkreises mit deaktiviertem Integralteil 3.2 im Drehzahlregler angepaßt, so daß sich der ungünstige Einfluß des Integralteils 3.2 auf das Führungsverhalten des Drehzahlreglers 3 eliminieren bzw. minimieren läßt. Das Referenzmodell 7 und das aktive Dämpfungselement 5 stören sich nicht, sondern ergänzen sich vorteilhaft.

In dieser Beschreibung wurde von einem rotatorischen Antrieb ausgegangen. In der Praxis werden zunehmend auch Linearantriebe eingesetzt, für die statt Drehzahl Geschwindigkeit und statt Drehmoment Kraft passendere Bezeichnungen sind. Natürlich ist die erfindungsgemäße Reglerstruktur ganz genauso auch für Linearantriebe einsetzbar, weshalb die hier verwendeten Begriffe Drehzahl und Drehmoment synonym für Geschwindigkeit und Kraft zu verstehen sind. An Werkzeugmaschinen mit mehreren Achsen kann die Erfindung auch für jede Achse separat eingesetzt werden. Die Reglerstruktur läßt sich sowohl analog als auch digital realisieren, die Erfindung hängt von der Art der Realisierung natürlich nicht ab.

**Patentansprüche**

1. Reglerstruktur zur aktiven Dämpfung niederfrequenter Schwingungen an numerisch gesteuerten Werkzeugmaschinen, mit einem Drehzahlregler (3) mit einem Proportionalteil (3.1) und einem Integralteil (3.2), **dadurch gekennzeichnet, daß** ein zur störenden niederfrequenten Schwingung phasenverschobenes und gleichanteilfreies niederfrequentes Korrektursignal (n_korr), das in einem aktiven Dämpfungselement (5) gebildet ist, an einer Additionsstelle (4.3, 4.4) vor oder nach dem Integralteil (3.2) aufgeschaltet ist.

2. Reglerstruktur nach Anspruch 1, **dadurch gekennzeichnet, daß** eine Abweichung der Istdrehzahl (n_ist) von der Solldrehzahl (n_soll) an zwei getrennten Additionsstellen (4.2, 4.3) für den Proportionalteil (3.1) und den Integralteil (3.2) separat gebildet ist, und daß das Korrektursignal (n_korr) an der Additionsstelle (4.3) vor dem Integralteil (3.2) aufgeschaltet ist.

3. Reglerstruktur nach Anspruch 1, **dadurch gekennzeichnet, daß** das Korrektursignal (n_korr) zunächst auf einen zusätzlichen Integralteil (3.2') geschaltet ist, der dem Integralteil (3.2) des Drehzahlreglers entspricht, und daß der Ausgang des zusätzlichen Integralteils (3.2') der Additionsstelle (4.4) nach dem Integralteil (3.2) aufgeschaltet ist.

4. Reglerstruktur nach Anspruch 2 oder 3, **dadurch gekennzeichnet, daß** im Dämpfungselement (5) zur Erzeugung des Korrektursignals (n_korr) an einer Additionsstelle (4.5) eine Differenz aus der mit der störenden niederfrequenten Schwingung überlagerten Solldrehzahl (n_soll) des Lagereglers (2) und einer aus einem Lagesollwert (l_soll) abgeleiteten Drehzahl (n_ipo) gebildet ist.

5. Reglerstruktur nach Anspruch 4, **dadurch gekennzeichnet, daß** im Dämpfungselement (5) die Differenz aus der Solldrehzahl (n_soll) und der abgeleiteten Drehzahl (n_ipo) durch ein DT1-Glied (5.1) geführt ist.

6. Reglerstruktur nach Anspruch 5, **dadurch gekennzeichnet, daß** der Ausgang des DT1-Glieds (5.1) einem PT2-Glied (5.2) zugeführt ist.

7. Reglerstruktur nach Anspruch 5 oder 6, **dadurch gekennzeichnet, daß** der Ausgang des DT1-Glieds (5.1) über ein PT1-Glied (5.3) dem Zweig der auf den Integralteil (3.2) des Drehzahlreglers (3) geleiteten Solldrehzahl (n_soll) zugeführt ist.

8. Reglerstruktur nach Anspruch 6, **dadurch gekennzeichnet, daß** die Dämpfungszeitkonstante (T2) des PT2-Glieds (5.2) entsprechend einer zu bedämpfenden Resonanzfrequenz (Fres) gewählt ist.

9. Reglerstruktur nach einem der Ansprüche 4 - 8, **dadurch gekennzeichnet, daß** die Differenz aus der Solldrehzahl (n_soll) und der abgeleiteten Drehzahl (n_ipo) mit einem Verstärkungsfaktor (M) multipliziert ist.

10. Reglerstruktur nach einem der vorhergehenden Ansprüche, **dadurch gekennzeichnet, daß** die Solldrehzahl (n_soll) noch vor der Differenzbildung mit der Istdrehzahl (n_ist) an der Additionsstelle (4.3) des Interpolationsteils (3.2) des Drehzahlreglers (3) über ein Referenzmodell (7) einer Regelstrecke geführt ist.

11. Reglerstruktur nach Anspruch 10, **dadurch gekennzeichnet, daß** das Referenzmodell (7) der Regelstrecke als ein die Regelstrecke nachbildendes, gegenphasig wirkendes PT2-Element ausgebildet ist.

**Claims**

1. Regulator structure for active damping of low-frequency oscillations in numerically controlled machine tools, with a speed regulator (3) with a proportional part (3.1) and an integral part (3.2), **characterised in that** a d.c. component-free low-frequency correcting signal (n_corr), which is phase-shifted relative to the interfering low-frequency oscillation and is formed in an active damping element (5), is added at an addition point (4.3, 4.4) before or after the integral part (3.2).

2. Regulator structure according to Claim 1, **characterised in that** a deviation of the real speed (n_real) from the set speed (n_set) is formed separately at two separate addition points (4.2, 4.3) for the proportional part (3.1) and the integral part (3.2), and that the correcting signal (n_corr) is added at the addition point (4.3) before the integral part (3.2).

3. Regulator structure according to Claim 1, **characterised in that** the correcting signal (n_corr) is firstly switched to an additional integral part (3.2'), which corresponds to the integral part (3.2) of the speed regulator, and that the output of the additional integral part (3.2') is added at the addition point (4.4) after the integral part (3.2).

4. Regulator structure according to Claim 2 or 3, **characterised in that** for generating the correcting signal (n_corr) at an addition point (4.5) a difference is formed in the damping element (5) from the set speed (n_set) of the position regulator (2) superposed by the interfering low-frequency oscillation and a speed (n_ipo) derived from a position set value (1_set).

5. Regulator structure according to Claim 4, **characterised in that** in the damping element (5) the difference from the set speed (n_set) and the derived speed (n-ipo) is directed through a DT1 element (5.1).

6. Regulator structure according to Claim 5, **characterised in that** the output of the DT1 element (5.1) is fed to a PT2 element (5.2).

7. Regulator structure according to Claim 5 or 6, **characterised in that** the output of the DT1 element (5.1) is fed via a PT1 element (5.3) to the branch of the set speed (n_set) directed onto the integral part (3.2) of the speed regulator (3).

8. Regulator structure according to Claim 6, **characterised in that** the damping time constant (T2) of the PT2 element (5.2) is selected in accordance with a resonance frequency (Fres) to be damped.

9. Regulator structure according to one of Claims 4-8, **characterised in that** the difference from the set speed (n_set) and the derived speed (n_ipo) is multiplied by an amplification factor (M).

10. Regulator structure according to one of the preceding claims, **characterised in that** the set speed (n_set) is directed to a control system via a reference model prior to formation of the difference with the real speed (n_real) at the addition point (4.3) of the interpolation part (3.2) of the speed regulator (3).

11. Regulator structure according to Claim 10, **characterised in that** the reference model (7) of the control system is configured as a PT2 element acting in antiphase, which simulates the control system.

**Revendications**

1. Structure de régulateur pour l'amortissement actif d'oscillations basse fréquence sur des machines-outils à commande numérique, comprenant un régulateur de vitesse de rotation (3) avec un élément proportionnel (3.1) et un élément intégral (3.2), **caractérisée en ce qu'**un signal de correction (n_korr) basse fréquence exempt de composantes continues, qui est formé dans un élément amortisseur actif (5) et est déphasé par rapport à l'oscillation basse fréquence perturbatrice, est appliqué à un point d'addition (4.3, 4.4), en amont ou en aval de l'élément intégral (3.2).

2. Structure de régulateur selon la revendication 1, **caractérisée en ce qu'**un écart de la vitesse de rotation réelle (n_ist) de la vitesse de rotation théorique (n_soll) est déterminé séparément en deux points d'addition (4.2, 4.3) séparés pour l'élément proportionnel (3.1) et l'élément intégral (3.2), et **en ce que** le signal de correction (n_korr) est appliqué au point d'addition (4.3) situé en amont de l'élément intégral (3.2).

3. Structure de régulateur selon la revendication 1, **caractérisée en ce que** le signal de correction (n_korr) est d'abord appliqué à un élément intégral supplémentaire (3.2') qui correspond à l'élément intégral (3.2) du régulateur de vitesse, et **en ce que** la sortie dudit élément intégral supplémentaire (3.2') est connectée au point d'addition (4.4) situé en aval de l'élément intégral (3.2).

4. Structure de régulateur selon la revendication 2 ou 3, **caractérisée en ce que**, pour générer le signal de correction (n_korr), il est établi dans l'élément amortisseur (5), en un point d'addition (4.5), une différence entre la vitesse théorique (n_soll) du régulateur de position (2), à laquelle est superposée l'oscillation basse fréquence perturbatrice, et une vitesse de rotation (n_ipo) dérivée d'une valeur théorique de position (I_soll).

5. Structure de régulateur selon la revendication 4, **caractérisée en ce que**, dans l'élément amortisseur (5), la différence entre la vitesse théorique (n_soll) et la vitesse dérivée (n_ipo) passe par un circuit DT1 (5.1).

6. Structure de régulateur selon la revendication 5, **caractérisée en ce que** la sortie du circuit DT1 (5.1) est connectée à un circuit PT2 (5.2).

7. Structure de régulateur selon la revendication 5 ou 6, **caractérisée en ce que** la sortie du circuit DT1 (5.1) est connectée via un circuit PT1 (5.3) à la branche de la vitesse théorique (n_soll) acheminée à l'élément intégral (3.2) du régulateur de vitesse (3).

8. Structure de régulateur selon la revendication 6, **caractérisée en ce que** la constante de temps d'amortissement (T2) du circuit PT2 (5.2) est choisie en fonction d'une fréquence de résonance (Fres) à amortir.

9. Structure de régulateur selon une des revendications 4 à 8, **caractérisée en ce que** la différence entre la vitesse théorique (n_soll) et la vitesse dérivée (n_ipo) est multipliée par un facteur d'amplification (M).

10. Structure de régulateur selon une des revendications précédentes, **caractérisée en ce que**, avant l'établissement de la différence avec la vitesse réelle (n_ist) au point d'addition (4.3) de l'élément intégral (3.2) du régulateur de vitesse (3), la vitesse théorique (n_soll) passe par un modèle de référence (7) d'un système à régler.

11. Structure de régulateur selon la revendication 10, **caractérisée en ce que** le modèle de référence (7) du système à régler est réalisé sous la forme d'un élément PT2 reproduisant le système à régler et agissant en opposition de phase.

FIG. 1

FIG. 2

FIG. 3

i_soll

n_ist
i_ist

4.4

3

3.2

3.1

5

n_karr

4.3

5.2

4.2

5.3

7

5.1

4.6

M

5.4

4.5

n_ipo

n_soll

6

2

4.1

i_soll

1

**EP 1 439 437 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0123967 A1